(19) Europäisches Patentamt
European Patent Office
Office européen des brevets

(11) **EP 3 131 938 B1**

(12) **EUROPEAN PATENT SPECIFICATION**

(45) Date of publication and mention
of the grant of the patent:
**14.03.2018 Bulletin 2018/11**

(21) Application number: **15718829.3**

(22) Date of filing: **14.04.2015**

(51) Int Cl.:
*C08G 18/08* (2006.01)   *C09D 11/102* (2014.01)
*C09D 11/322* (2014.01)   *C09D 11/326* (2014.01)
*C08G 18/28* (2006.01)

(86) International application number:
**PCT/EP2015/058109**

(87) International publication number:
**WO 2015/158738 (22.10.2015 Gazette 2015/42)**

(54) **ADDITIVE FOR INKJET INKS**

ADDITIV FÜR TINTENSTRAHLTINTEN

ADDITIF POUR ENCRES À JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2014 IT VA20140015**

(43) Date of publication of application:
**22.02.2017 Bulletin 2017/08**

(73) Proprietor: **Lamberti SpA
21041 Albizzate (VA) (IT)**

(72) Inventors:
• **COGET, Karine
I-21019 Somma Lombardo (IT)**
• **ESPOSITO, Simona
I-21013 Gallarate (VA) (IT)**
• **GALLO, Thomas
I-21052 Busto Arsizio (VA) (IT)**
• **NAPPA, Alan
I-41125 Modena (IT)**
• **FUMAGALLI, Stefano
I-21040 Carnago (VA) (IT)**
• **FLORIDI, Giovanni
I-28100 Novara (IT)**
• **LI BASSI, Giuseppe
I-21026 Gavirate (VA) (IT)**

(74) Representative: **Giaroni, Paola
LAMBERTI S.p.A.
Ufficio Brevetti
Via Piave, 18
21041 Albizzate (VA) (IT)**

(56) References cited:
**EP-A1- 2 341 110      WO-A1-2012/116878
WO-A2-2013/098652   US-A1- 2012 154 481**

## Description

FIELD OF THE INVENTION

The present invention relates to an additive acting as milling and dispersing agent for ceramic inkjet inks and to a method for decorating glass substrates and green or fired ceramic bodies by the use of inkjet printing.

The ceramic inkjet inks of the invention comprise ceramic inorganic pigments having average particle size between 0.1 and 0.8 $\mu$m dispersed in an organic medium and a milling and dispersing agent which is a carboxylated polyurethane obtained by reacting a diisocyanate trimer, a monofunctional polyetheralcohol or polyetheramine and a carboxylated diol.

BACKGROUND OF THE ART

The decoration phase of glass substrates and of ceramic materials, such as wall and floor tiles, is made by the application of inorganic sinterable and variously coloured materials which are dispersed in a liquid medium and applied according to a preset drawing (decor).

The decor can be applied by various methods, but digital printing by inkjet technique has recently become more and more appreciated in the field.

Digital printing and decoration by inkjet technique is already widely used in multiple sectors, such as graphic arts, textile industry, industrial marking and it is well known, both referring to the printing equipments and also to the inks used.

In the decoration of ceramic and glass substrates, the thermal treatment which is required once the substrate has been printed, typically performed at temperature above 500°C and up to about 1250°C, makes the conventional inkjet inks that are used in the other applications, mainly based on organic pigments, unsuitable for use.

Inks for ceramic and glass substrates are based on dispersions of ceramic inorganic pigments; moreover the ceramic inorganic pigments of the inks for inkjet printing must possess sub-micronic-scale dimensions, because the inkjet ink flows at high speed through the small nozzles of the print head (30-100 $\mu$m in diameter). Sub-micronic-scale dispersions of the ceramic inorganic pigments shall be obtained by milling with microspheres the pre-dispersed pigments in the medium in the presence of milling aids and shall be stabilized against re-aggregation, permanent sedimentation and increase in viscosity.

Inkjet inks for decorating glass substrates comprise, beside ceramic inorganic pigments, solvent and dispersing agent, also a binding agent, which is typically a glass frit or is based on silica sub-micronic particles. Inkjet inks for decorating glass substrates are applied at about room temperature by an inkjet printer and heated to temperatures above 500°C in order to fuse the binding agent and fix the pigments on the substrate.

Both the ceramic inorganic pigments and the glass frits need to pass through the inkjet nozzles and typically have particle size below 1 micron. To obtain such tiny dimensions of the particles, the pigments and frits are usually separately milled in the presence of one or more dispersing agent to the desired particle size and then combined to form the ink.

A description of inkjet inks for glass substrates may be found by way of example in US 7,803,221 (DIP Tech Ltd).

In the case of ceramic substrates, the decor may be applied either on green or fired ceramic bodies, on which the glaze was previously set, or, in the so called third firing decorations, after the firing, on the sintered glaze. About the same requirements of average particle size of the ceramic inorganic pigments shall be met. Examples of inkjet inks for ceramic based on dispersions of ceramic inorganic pigments in polar organic mediums are described in EP 2159269, WO 2006/126189, EP 1840178, WO 2012/076438, WO 2012/107379, WO 2012/116878.

The ink jet inks shall have low viscosity, average particle size below 0.8 $\mu$m, a narrow distribution of the particle size, a long shelf life; they shall be suitable to be printed on glass and ceramic surfaces and to be passed through a high temperature kiln to form a permanently sintered glazed print. Therefore, there is still the industrial need for improved dispersing agents for the preparation of inkjet inks based on inorganic ceramic pigments having all the above cited characteristics.

A huge variety of dispersing agents for inorganic pigments has been developed in the last fifty years, but very few of them are utilizable for the preparation, i.e. for the milling and proper stabilization, of inkjet inks containing ceramic inorganic pigments.

It has now been found that a dispersing agent which is a carboxylated polyurethane obtained by reacting a diisocyanate trimer, a monofunctional polyetheralcohol or monofunctional polyetheramine, and a carboxylated diol can conveniently be used in the preparation of ceramic inkjet inks. Surprisingly, the above carboxylated polyurethane, is perfectly suitable to fluidize the pre-dispersed inorganic ceramic pigments before milling, to allow their rapid milling and to subsequently prevent agglomeration and permanent sedimentation of the sub-micronic-scale inorganic ceramic pigments in the final inks.

DRAWINGS

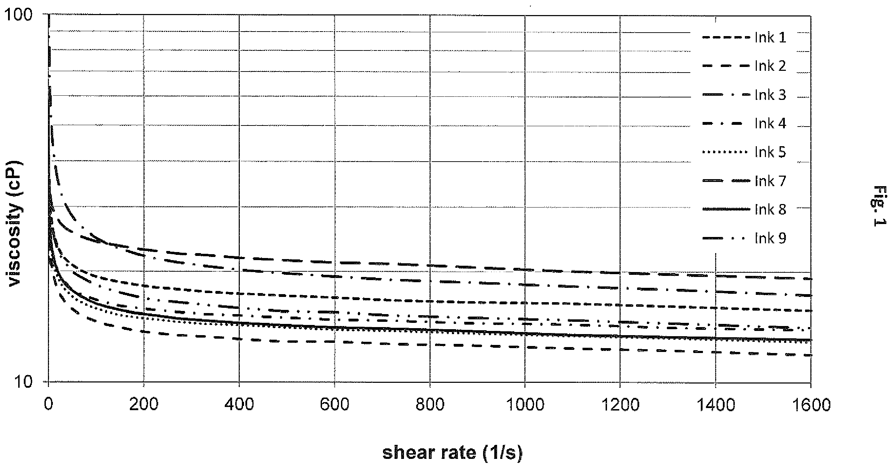

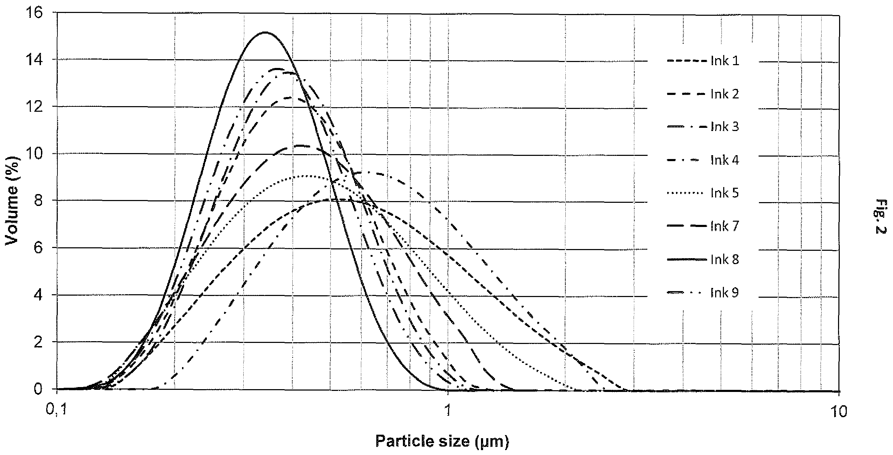

The rheological curves (flow curves at variable shear rates), recorded three hours after milling, of ceramic inkjet inks containing as dispersing agent the Dispersing Agents of Examples 1-5,7-9 at 45°C are reported in Fig. 1. The particle size distribution of the same inks is reported in Fig. 2.

SUMMARY OF THE INVENTION

In one aspect, the invention is a milling and dispersing agent which is a carboxylated polyurethane obtained by:

a. reacting m moles of a diisocyanate trimer with about m moles of a monofunctional polyetheralcohol or monofunctional polyetheramine having average molecular weight from about 500 to about 4,000, to obtain an adduct;
b. reacting the above adduct with n moles of one or more diols, the molar ratio m/n being comprised between 1.09 and 2.00, provided that at least one of the diols is a carboxylated diol, the one or more carboxylated diol represents at least 40% in moles of the diols and the non-carboxylated diols are non-ionic and non-ionizable diols, to form an intermediate product;
c. reacting the intermediate product with equivalent amounts, based on the isocyanate group (NCO) content, of a monofunctional polyetheralcohol or monofunctional polyetheramine having average molecular weight from about 120 to about 4,000, or of a $C_1$-$C_8$, linear or branched, alkyl or alkenyl monoalcohol, or of a $C_1$-$C_8$, linear or branched, alkyl or alkenyl primary or secondary monoamine.

In another aspect the invention is a ceramic inkjet ink comprising ceramic inorganic pigments average particle size between 0.1 and 0.8 $\mu$m, the pigments being dispersed in an organic medium and, as dispersing agent, the above described carboxylated polyurethane.

In another aspect, the invention is a method for decorating green or fired ceramic bodies by inkjet printing that comprises the following steps:

i. a ceramic inkjet ink comprising a ceramic inorganic pigment having and average particle size between 0.1 and 0.8 $\mu$m is prepared by milling an inorganic ceramic pigment in an organic medium, in the presence of the above described carboxylated polyurethane;
ii. a glaze is spread on the surface of a green or fired ceramic body;
iii. the decoration is made by means of inkjet printing on the green or fired ceramic body by using one or more ceramic inkjet inks according to point i.;
iv. the ceramic body is fired at temperature comprised between 900 and 1250°C for 15-240 minutes.

In yet another aspect, the invention is a method for decorating glass substrates by inkjet printing that comprises the following steps:

I. a ceramic inkjet ink comprising a ceramic inorganic pigment having average particle size between 0.1 and 0.8 $\mu$m is prepared by milling an inorganic ceramic pigment in an organic medium, in the presence of the above described carboxylated polyurethane;
II. a glass frit is dispersed in an organic medium in the presence of a dispersing agent and milled to obtain a glass frit dispersion;
III. the ceramic inkjet ink of point I and the glass frit dispersion of point II are mixed to form an inkjet ink for glass substrates;
IV. the decoration is made by means of inkjet printing on the glass substrate by using one or more inkjet ink for glass substrates according to point III;
V. the glass substrate is heated at temperature comprised between 500 and 700°C for 1-30 minutes.

DETAILED DESCRIPTION OF THE INVENTION

*The milling and dispersing agent.*
The milling and dispersing agent is a carboxylated polyurethane obtained by the process described by the specific steps from a. to c.
The diisocyanate trimers that can be used in step a. are isocyanurates, iminooxadiazinediones and biureth trimers that are obtained from the self-condensation of organic diisocyanates, as described for example in "The Synthesis of Aliphatic Polyisocyanates Containing Biuret, Isocyanurate or Uretdione Backbones for Use in Coatings" (H. J. Laas, R. Halpaap, J. Pedain, J. Prakt. Chem./Chem. Ztg. 1994, 336, 185-200) and in DE 19611849 (Bayer AG).

Typically, they are obtained from the self-condensation of the following diisocyanates: 1,6-hexamethylenediisocyanate (HDI), isophorone diisocyanate (IPDI), 4,4'-dicyclohexylmethane diisocyanate (HMDI), toluene diisocyanate (TDI), 4,4'-diphenylmethane diisocyanate (MDI) and mixtures thereof.

The preferred diisocyanate trimers are the isocyanurate, the iminooxadiazinedione and biureth trimers of aliphatic or cycloaliphatic diisocyanates, the most preferred diisocyanate trimer being an iminooxadiazinedione.

Diisocyanate trimers are commercially available, by way of example under the trade names Desmodur® N 3900, Desmodur® N 3600, Desmodur® N 3800, Desmodur® N 3790 and Desmodur® N 3400 from Bayer MaterialScience.

The diisocyanate trimers that can be used in step a. have NCO functionality from 2.0 to 4.0, preferably from 2.8 to 3.6, more preferably from 3.0 to 3.4.

Mixtures of diisocyanate trimers may be used in step a..

In step a., the diisocyanate trimers are reacted with a monofunctional polyetheralcohol or monofunctional polyetheramine having average molecular weight from about 500 to about 4,000.

In the present text by average molecular weight we mean the weight average molecular weight in Dalton ($MW_w$), measured by Gel Permeation Chromatography.

By monofunctional polyetheralcohol we mean a compound having a plurality of ether linkages and only one OH (hydroxyl) group which is able to react with a isocyanate group (NCO); analogously, by monofunctional polyetheramine we mean a compound having a plurality of ether linkages and only one NH- (amino) group which is able to react with a NCO. Mixtures of one or more monofunctional polyetheralcohol and one or more monofunctional polyetheramine may be used in step a.

In step a., the m moles of the diisocyanate trimer are determined from its equivalent weight (EW), which is calculated from the determination of the NCO content according to ASTM standard method D2572, by means of the following formula:

$$\text{m (mol)} = \text{g (grams)}/3(\text{eq/mol}) * \text{EW (g/eq)}.$$

The diisocyanate trimer is reacted with about m moles, i.e. from 0.8m to 1.2m moles, and preferably from 0.9m to 1.1m moles, of the monofunctional polyetheralcohol or monofunctional polyetheramine.

The preferred monofunctional polyetheralcohol and polyetheramine are a poly(oxypropylene)poly(oxyethylene)alcohol and a poly(oxypropylene)poly(oxyethylene)amine in which the oxyethylene and oxypropylene groups are present in blocks or randomly, and the molar ratio between oxypropylene and oxyethylene groups is from 10:1 to 0.1:1, preferably from 10:1 to 3:1, most preferably from 6:1 to 4:1.

The monofunctional polyetheralcohol and monofunctional polyetheramine have average molecular weight from about 500 to about 4,000; according to an advantageous embodiment of the invention, they have average molecular weight from 800 to 3,000, more advantageously from 1,500 to 3,000.

The adduct of step a. is preferably obtained by reacting the diisocyanate trimer with a monofunctional polyetheramine.

Useful monofunctional polyetheramines are available on the market under the trade name Jeffamine® M (Huntsman Corp.).

The reaction of step a. usually takes place in the presence of a solvent at temperature from 15 to 200 °C, preferably at temperature from 15 to 50°C. The solvent shall be chosen among solvents which are not reactive toward the isocyanate groups.

Examples of solvents that can be used in step a. are propyleneglycol monomethyl ether acetate, dipropyleneglycol monomethyl ether acetate, propyleneglycol diacetate, diethyleneglycol monobutyl ether acetate.

The completion of the reaction of step a. may be monitored by repeatedly measuring the NCO content, according to the ASTM D2572 method, until the theoretical NCO content is reached.

In step b., the adduct resulting from step a. is reacted with n moles of one or more diols, at least one of which being a carboxylated diol, to form an intermediate product.

The presence of a significant amount of carboxylate diol is essential for the obtainment of a milling and dispersing agent that can be used in the preparation of inkjet inks comprising ceramic inorganic pigments.

The carboxylated diol represents at least 40%, preferably at least 60%, in moles of the diols used in step b., the sum to 100% possibly being made of non-ionic and non-ionizable diols.

It has been found that a high percentage of carboxylated diol, typically above 60% by moles, enhances the milling performances of the polyurethane, thus providing inkjet inks for ceramic and glass substrates with remarkably good particle size distribution.

According to a particularly preferred embodiment, in step b. the one or more carboxylated diol represents at least 90% in moles of the diols; according to the most preferred embodiment, the adduct is reacted with carboxylated diols only, i.e. the one or more carboxylated diol represents 100% in moles of the diols.

The molar ratio between the adduct from step a. and the diols used in step b. is also critical for the obtainment of the desired dispersing properties of the carboxylated polyurethane. A molar ratio m/n between 1.09 and 2.00 corresponds to a final carboxylate polyurethane having, in the average, from 12 to 2 repetitive units deriving from the diisocyanate trimer. Preferably, the molar ratio m/n is comprised between 1.11 and 2.00, most preferably between 1.20 and 2.00, values that respectively correspond to a final carboxylate polyurethane having, in the average, from 10 to 2 and from 6 to 2 repetitive units deriving from the diisocyanate trimer. Optionally, in step b. up to 20% moles of adduct may be substituted by one or more of the above cited organic diisocyanates, but preferably, in step b., the diol(s) only react with the adduct prepared in step a.

The carboxylated diol is advantageously an aliphatic carboxylated diol having molecular weight from about 92 to about 300 Dalton. The preferred carboxylated diols are dimethylol alkanoic acids, such as dimethylolpropionic acid (DMPA) and dimethylolbutanoic acid (DMBA), DMPA being the most preferred carboxylated diol.

The carboxylated diol may be reacted in its acid form or in the form of salt, for example in the form of trialkylammonium salt.

Preferably the carboxylated diol is reacted in its acid form.

The non-ionic and non-ionizable diol that can be used in combination with the carboxylated diol is, most advantageously, a diol having a molecular weight from 62 to 400 Dalton.

Examples of non-ionic and non-ionizable diols that can be used in step b. are 1,4-cyclohexanedimethanol, 1,2-propanediol, 1,3-propanediol, 1,2-ethanediol, 1,4-butanediol, 1,6-hexanediol, 2,2-dimethyl-1,3-propandiol, bisphenol A, E or F, bisphenol A, E or F propoxylated with two moles of propylene oxide, mixtures thereof.

The preferred non-ionic and non-ionizable diols that can be used in step b. are 1,4-cyclohexanedimethanol (CHDM) and bisphenol A propoxylated with two moles of propylene oxide.

Particularly preferred are non-ionic and non-ionizable diols having molecular weight from 62 to 200 Dalton.

The intermediate product from step b. is finally reacted in step c.

with equivalent amounts, based on the NCO content as determined according to ASTM D2572, of a monofunctional polyetheralcohol or monofunctional polyetheramine having average molecular weight from about 120 to about 4,000, or with a $C_1$-$C_8$, linear or branched, alkyl or alkenyl monoalcohol, or with a $C_1$-$C_8$, linear or branched, alkyl or alkenyl primary or secondary monoamine.

By equivalent amount we mean that one equivalent of OH (hydroxyl) groups, or NH- (amino) groups, are reacted in step c. with one equivalent of NCO present in the intermediate product, to exhaust all isocyanate groups.

The monofunctional polyetheralcohol and monofunctional polyetheramine having average molecular weight from about 120 to about 4,000 may be the same monofunctional polyetheralcohol or polyetheramine used in step a., or may be different.

Mixtures of monofunctional polyetheralcohol, monofunctional polyetheramine, $C_1$-$C_8$, linear or branched, alkyl or alkenyl monoalcohol and $C_1$-$C_8$, linear or branched, alkyl or alkenyl primary or secondary monoamine may be used in step c..

The $C_1$-$C_8$, linear or branched, alkyl or alkenyl monoalcohol may be chosen, by way of example, among isopropanol, butyl alcohol, 1-hexanol, 2-ethyl,1-hexanol.

The $C_1$-$C_8$, linear or branched, alkyl or alkenyl primary or secondary monoamine may be chosen, by way of example, among 1-butylamine and isopropylamine.

The resulting milling and dispersing agent may be represented by a mixture of polyurethanes of the formula

$$R'\text{-}T(R)\text{-}[A\text{-}T(R)]_w\text{-}[B\text{-}T(R)]_t\text{-}R'$$

in which:

T is the repetitive unit deriving from the diisocyanate trimer,
R is the residue of the monofunctional polyetheralcohol or polyetheramine having average molecular weight from about 500 to about 4,000,
R' is the same as R, or is the residue of the monofunctional polyetheralcohol or polyetheramine having average molecular weight from about 120 to about 4,000, or is the residue of the $C_1$-$C_8$ alkyl or alkenyl alcohol or of the $C_1$-$C_8$ alkyl or alkenyl primary or secondary amine,
A is the residue of the carboxylated diol having molecular weight from 92 to 300 Dalton,
B is the residue of the non-ionic and non-ionizable diol having molecular weight from 62 to 400 Dalton,
w is a number between 1 and 11,
w+t is in the average a number from 1 to 11,

$$[t/(w+t)] \leq 0.6$$

and the groups [A-T(R)] and [B-T(R)] are present in any order in each polyurethane.

*The inkjet ink.*

The carboxylated polyurethane may be used as milling and dispersing agent for the preparation of inkjet inks that are subject to a heating treatment at temperature of 500°C, and above, and that comprise ceramic inorganic pigments having average particle size between 0.1 and 0.8 $\mu$m; in the present text these inks are defined "ceramic inkjet inks".

These inkjet inks are basically made of ceramic inorganic pigments, liquid organic medium and milling and dispersing agent.

The ceramic inorganic pigment of the inkjet ink of the present invention shall exhibit an average particle size ($d_{50}$) of less than 0.8 $\mu$m, preferably from 0.1 to 0.5 $\mu$m and most preferably from 0.1 to 0.3 $\mu$m, as measured by laser diffraction particle size analysis (ISO 13320-2009).

The average particle size ($d_{50}$), i.e. the average equivalent diameter, is the diameter where 50 percent by weight of the particles have a larger equivalent diameter, and the other 50 percent by weight have a smaller equivalent diameter.

According to the most preferred embodiment of the invention, the ceramic inorganic pigment of the ceramic inkjet ink of the present invention, beside exhibiting average particle size ($d_{50}$) of less than 0.8 $\mu$m, also have $d_{90}$ of less than 0.8 $\mu$m (the diameter where 10 percent by weight of the particles have a larger equivalent diameter, and the other 90 percent by weight have a smaller equivalent diameter).

Any of the recognized classes of ceramic inorganic pigments that can be used in the decoration processes of ceramic and glass substrates that comprise a thermal treatment of the applied ink at temperature above 500°C ("ceramic inorganic pigments") may be used in the ceramic inkjet inks of the invention. They are, for example, zirconates and silicates of Cr, Sn, Ni, Pr, Fe, Co and oxides thereof, and preferably those ceramic inorganic pigments selected from ZrPr, ZrPrSi, ZrFeSi, TiCrSb, CoAlZn, ZrVaSi, FeCrCoNi, CrCaSnSi, CoSi, and FeCrZn.

The organic medium present in the ceramic inkjet ink may be any polar organic medium or a substantially non-polar aliphatic or aromatic hydrocarbon or a halogenated hydrocarbon, including mixtures thereof, provided that the carboxylated polyurethane is soluble in the organic medium; preferably the organic medium is a polar organic medium, such as a glycol ether or glycol ether ester exhibiting a flash point in excess of 75°C, for example propyleneglycol monomethyl ether acetate, polypropylene glycol, tripropylene glycol monomethyl ether (Dowanol® TPM), tripropylene glycol butyl ether (Dowanol® TPB), butyl glycol ether acetate, tetraethylene glycol dimethyl ether, sulfolane.

The preferred organic mediums are propyleneglycol monomethyl ether acetate, tripropylene glycol monomethyl ether and tripropylene glycol butyl ether.

The organic medium may be partially aqueous, that is a mixture of water and one or more polar water-miscible solvent, provided that the carboxylated polyurethane is still soluble in the mixture.

According to an advantageous aspect of the present invention the solubility of the carboxylated polyurethane in the organic medium may be modulated by the hydrophilicity/hydrophobicity (chemical nature) and chain length of the monofunctional polyetheralcohol or polyetheramine and by the percentage of carboxylated diol used in step b.

By way of example, with the above cited preferred organic mediums, the monofunctional polyetheralcohol or polyetheramine used in step a) is advantageously a poly(oxypropylene)poly(oxyethlene)alcohol or a poly(oxypropylene)poly(oxyethlene)amine with average molecular weight of about 500 to 3,000, most advantageously of about 2,000 and in which the molar ratio between oxypropylene and oxyethylene groups is from 10:1 to 4:1, and in step b. the one or more carboxylated diol represents at least 90% in moles of the diols; according to a particularly preferred embodiment, in step b. the adduct is reacted with carboxylated diols only.

The ceramic inkjet ink typically contains from 5 to 60% by weight of the ceramic inorganic pigment, the precise quantity depending on the nature of the pigment and on the relative densities of the pigment and the organic medium. Preferably the ink contains from 15 to 55% by weight of the pigment.

The content of liquid organic medium in the ink is from 30 to 80% by weight based on the total weight of the ink, preferably from 45 to 80% by weight.

The content of the milling and dispersing agent in the ink is between 2 and 15% by weight based on the total weight of the ink, preferably from 4 to 10% by weight.

Besides having proper particle size distribution and stability, the ceramic inkjet inks shall have low viscosity.

The type and quantity of the milling and dispersing agent greatly affects the rheology of the inkjet ink.

Accordingly, it has been found that the ink typically should have viscosity at 329 $s^{-1}$ shear rate, at 45°C, below 30 mPa*s. The most preferred inks have viscosity at 329 $s^{-1}$ shear rate, at 45°C, below 20 mPa*s.

The Brookfield® viscosity of the ceramic inkjet ink is generally between 5 and 50 mPa*s at r.t.

The ceramic inkjet ink of the invention is prepared by milling a commercial ceramic inorganic pigment having average particle size between 1.0 and 10.0 $\mu$m, in the presence of the liquid organic medium and the carboxylated polyurethane as the milling and dispersing agent.

The inorganic pigment, the liquid organic medium and the milling and dispersing agent may be mixed in any order, the mixture then being subjected to a mechanical treatment to reduce the particles of the pigment to an appropriate size by milling with milling beads having diameters from 0.1 to 0.5 mm.

When the pigment is milled, the temperature is preferably not greater than 45°C.

The inkjet inks for the decoration of ceramic bodies and glass substrates shall be stable.

Visual observation is used to control the stability of the ink jet. Stability tests are done by storing the samples for 14 days at 50°C. By stable, we mean that no sediment formation occurs during storage or that a sediment is formed but it can be re-dispersed immediately by stirring.

The invention is also related to a method for decorating green or fired ceramic bodies by inkjet printing that comprises the steps from i. to iv. detailed above.

In step i. a ceramic inkjet ink comprising a ceramic inorganic pigment having average particle size between 0.1 and 0.8 $\mu$m is prepared by milling an inorganic ceramic pigment in an organic medium, in the presence of the above described carboxylated polyurethane, possibly filtering the resulting mixture to eliminate particles with particles size above 1$\mu$m.

In the subsequent steps, a glaze is spread on the surface of a green or fired ceramic body, the decoration is made by means of inkjet printing on the green or fired ceramic body by using one or more ceramic inkjet inks according to point i. and finally the ceramic body is fired at temperature comprised between 900 and 1250°C for 15-240 minutes.

The invention is further related to a method for decorating glass substrates by inkjet printing.

Inkjet inks for decorating glass substrates comprise, beside ceramic inorganic pigments, solvent and dispersing agent, also an inorganic sinterable binding agent, which is typically a glass frit or generally based on silica sub-micronic particles. Both the ceramic inorganic pigments and the glass frits need to pass through the inkjet nozzles and typically have average size below 1 micron.

To obtain such tiny dimensions of the particles, the pigments and frits are usually separately milled in the presence of one or more dispersing agent to the desired particle size and then combined to form the ink.

The method for decorating glass substrates by inkjet printing comprises a first step in which a ceramic inkjet ink comprising a ceramic inorganic pigment having average particle size between 0.1 and 0.8 $\mu$m is prepared by milling an inorganic ceramic pigment in an organic medium, in the presence of the above described carboxylated polyurethane, possibly filtering the resulting mixture to eliminate particles with particles size above 1$\mu$m.

Subsequently, a glass frit is dispersed in an organic medium in the presence of a dispersing agent and milled to obtain a glass frit dispersion.

The glass frit is preferably dispersed in the organic medium at solid content from 65 to 75%wt in the presence of a dispersing agent, and milled to obtain particle sizes less than 1$\mu$m, taking care not to have agglomeration. The glass frit is such that the glass has a sintering temperature below 600°C.

The ceramic inkjet ink comprising the ceramic inorganic pigment and the glass frit dispersion are mixed to form an inkjet ink for glass substrates in such a proportion that the weight ratio of the frit particles to pigment particles is from 3:1 to 2:1.

If necessary the ink is diluted with an organic medium to a solid content from 40 to 50 %wt.

The decoration is made by means of inkjet printing on the glass substrate by using one or more inks prepared as described above and the glass substrate is heated at temperature comprised between 500 and 700°C for 1-30 minutes.

The ink is thus sintered, fused or melted to become inseparable from the upper surface of the glass substrate

The invention is further illustrated by the following examples.

EXAMPLES

Preparation of the Dispersing Agents 1-9

EXAMPLE 1 (Dispersing Agent 1)

67.2 g (126.3 mmol) of Desmodur® N 3900 (from Bayer MaterialScience, CH), a iminooxadiazinedione diisocyanate trimer of hexamethylene diisocyanate having equivalent weight 177.3 g/eq, and 500.0 g of propyleneglycol monomethyl ether acetate are loaded in a reactor equipped with thermometer, stirrer and condenser, under nitrogen atmosphere and at room temperature.

252.6 g (126.3 mmol) of Jeffamine® M2005 from Huntsman Corp. (US), a poly(oxypropylene)poly(oxyethylene)amine with molar ratio between oxypropylene and oxyethylene groups 29/6 and $MW_w$=2000 g/mol, are added under stirring. The reaction temperature increases by 6 °C.

The reaction is carried out until the content of NCO groups is constant, to obtain a solution of Adduct 1 in propyleneglycol monomethyl ether acetate (the content of isocyanate groups has been determined in this and all the other examples according to the standard test method ASTM D2572).

5.6 g (42.1 mmol) of dimethylolpropionic acid and 6.1 g (42.1 mmol) of cyclohexanedimethanol are added to the solution.

The reaction mixture is then heated up to 80°C and then 0.60 g of bismuth tris(neodecanoate) are added (catalyst).

The reaction is carried out at 80°C, until the content of NCO groups in the intermediate is constant.

At approximately 80 °C, 168.4 g (84.2 mmol) of Jeffamine® M2005 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 1.

EXAMPLE 2 (Dispersing Agent 2)

A solution of Adduct 1 in propyleneglycol monomethyl ether acetate is prepared as described in Example 1.

11.3 g (84.3 mmol) of dimethylolpropionic acid are added to the solution. The reaction mixture is then heated up to 80°C and then 0.60 g of bismuth tris(neodecanoate) are added (catalyst).

The reaction is carried out at 80°C, until the content of NCO groups in the intermediate is constant.

At approximately 80 °C, 168.6 g (84.3 mmol) of Jeffamine® M2005 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 2.

EXAMPLE 3 (Dispersing Agent 3)

70.2 g (125.6 mmol) of Desmodur ® N 3600 from Bayer MaterialScience (CH), a isocyanurate trimer of hexamethylene diisocyanate having equivalent weight 186.3 g/eq, and 500.0 g of propyleneglycol monomethyl ether acetate are loaded in a reactor equipped with thermometer, stirrer and condenser, under nitrogen atmosphere and at room temperature.

251.1 g (125.6 mmol) of Jeffamine® M2005 are added under stirring. The reaction temperature increases by 6 °C.

The reaction is carried out until the content of NCO groups is constant, to obtain a solution of Adduct 2 in propyleneglycol monomethyl ether acetate.

11.3 g (83.7 mmol) of dimethylolpropionic acid are added to the solution. The reaction mixture is then heated up to 80°C and then 0.60 g of bismuth tris(neodecanoate) are added (catalyst).

The reaction is carried out at 80°C, until the content of NCO groups in the prepolymer is constant.

At approximately 80 °C, 167.4 g (83.7 mmol) of Jeffamine® M2005 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 3.

EXAMPLE 4 (Dispersing agent 4)

97.3 g (182.9 mmol) of Desmodur® N 3900 and 500.0 g of propyleneglycol monomethyl ether acetate are loaded in a reactor equipped with thermometer, stirrer and condenser, under nitrogen atmosphere and at room temperature.

365.8 g (182.9 mmol) of Jeffamine® M2005 are added under stirring. The reaction temperature increases by 8 °C.

The reaction is carried out, until the content of NCO groups in the adduct is constant, to obtain a solution of Adduct 1 in propyleneglycol monomethyl ether acetate.

8.2 g (61.0 mmol) of dimethylolpropionic acid and 21.3 g (61.0 mmol) of bisphenol A propoxylated with two moles of propylene oxide are added to the solution.

The reaction mixture is then heated up to 80°C and then 2.24 g of bismuth tris(neodecanoate) are added (catalyst).

The reaction is carried out at 80°C, until the content of NCO groups in the intermediate is constant.

At approximately 80 °C, 7.3 g (122.0 mmol) of 2-propanol are added under stirring.

The reaction is carried out at 80°C, until the disappearance of NCO groups is detected by IR analysis (in particular with the disappearance of IR band at wave number 2260 - 2280 cm$^{-1}$) and the mixture is cooled to room temperature to give Dispersing Agent 4.

EXAMPLE 5 (Dispersing Agent 5)

72.1 g (135.6 mmol) of Desmodur® N 3900 and 500.0 g of propyleneglycol monomethyl ether acetate are loaded in a reactor equipped with thermometer, stirrer and condenser, under nitrogen atmosphere and at room temperature.

271.3 g (135.6 mmol) of Jeffamine® M2005 are added under stirring. The reaction temperature increases by 6 °C.

The reaction is carried out, until the content of NCO groups in the adduct is constant, to obtain a solution of Adduct 1 in propyleneglycol monomethyl ether acetate.

9.1 g (67.8 mmol) of dimethylolpropionic acid and 11.9 g (33.9 mmol) of bisphenol A propoxylated with two moles of propylene oxide are added to the solution.

The reaction mixture is then heated up to 80°C, and then 0.66 g of bismuth tris(neodecanoate) are added (catalyst).

The reaction is carried out at 80°C, until the content of NCO groups in the intermediate is constant.

At approximately 80 °C, 135.6 g (67.8 mmol) of Jeffamine® M2005 are added under stirring.

The reaction is carried out at 80°C, until the disappearance of NCO groups is detected by IR analysis (in particular with the disappearance of IR band at wave number 2260 - 2280 cm$^{-1}$) and the mixture is cooled to room temperature to give Dispersing Agent 5.

EXAMPLE 6 (Dispersing Agent 6 - Comparative)

118.9 g (119.5 mmol) of Polurene® AD (from Sapici, IT), a diisocyanatotoluene-trimethylolpropane adduct, with active content 76wt% in ethyl acetate and equivalent weight 252.05 g/eq, and 471.5 g of propyleneglycol monomethyl ether acetate are loaded in a reactor equipped with thermometer, stirrer and condenser, under nitrogen atmosphere and at room temperature.

239.1 g (119.5 mmol) of Jeffamine® M2005 are added under stirring. The reaction temperature increases by 6 °C.

The reaction is carried out, until the content of NCO groups in the adduct is constant, to obtain a solution of Adduct 3 in propyleneglycol monomethyl ether acetate

5.4 g (39.8 mmol) of dimethylolpropionic acid and 5.7 g (39.8 mmol) of cyclohexanedimethanol with two moles of propylene oxide are added to the solution.

The reaction is carried out at 80°C, until the content of NCO groups in the intermediate is constant.

At approximately 80 °C, 159.4 g (79.7 mmol) of Jeffamine® M2005 are added under stirring.

After about 10 minutes, the disappearance of NCO groups is detected by IR analysis of the mixture and (in particular with the disappearance of IR band at wave number 2260 - 2280 cm$^{-1}$) and the mixture is cooled to room temperature to give Dispersing Agent 6 (comparative).

EXAMPLE 7 (Dispersing Agent 7)

164.0 g (308.4 mmol) of Desmodur® N 3900 and 500.0 g of propyleneglycol monomethyl ether acetate are loaded in a reactor equipped with thermometer, stirrer and condenser, under nitrogen atmosphere and at room temperature.

185.0 g (308.4 mmol) of Jeffamine® M600 from Huntsman Corp. (US), a poly(oxypropylene)poly(oxyethylene)amine with molar ratio between oxypropylene and oxyethylene groups 9/1 and $MW_w$=600 g/mol, are added under stirring. The reaction temperature increases by 6 °C.

The reaction is carried out until the content of NCO groups is constant, to obtain a solution of Adduct 4 in propyleneglycol monomethyl ether acetate.

27.6 g (205.6 mmol) of dimethylolpropionic acid are added to the solution.

The reaction mixture is then heated up to 80°C and then 0.34 g of bismuth tris(neodecanoate) are added (catalyst).

The reaction is carried out at 80°C, until the content of NCO groups in the prepolymer is constant.

At approximately 80 °C, 123.4 g (205.6 mmol) of Jeffamine® M600 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 7.

EXAMPLE 8 (Dispersing Agent 8)

57.3 g (108.7 mmol) of Desmodur® N 3900 and 500.0 g of propyleneglycol monomethyl ether acetate are loaded in a reactor equipped with thermometer, stirrer and condenser, under nitrogen atmosphere and at room temperature.

217.4 g (108.7 mmol) of Jeffamine® M2005 are added under stirring. The reaction temperature increases by 6 °C.

The reaction is carried out, until the content of NCO groups is constant, to obtain a solution of Adduct 1 in propyleneglycol monomethyl ether acetate.

7.3 g (54.4 mmol) of dimethylolpropionic acid are added to the solution. The reaction mixture is then heated up to 80°C and then 0.51 g of bismuth tris(neodecanoate) are added (catalyst).

The reaction is carried out at 80°C, until the content of NCO groups in the prepolymer is constant.

At approximately 80 °C, 217.4 g (108.7 mmol) of Jeffamine® M2005 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 8.

EXAMPLE 9 (Dispersing Agent 9)

77.3 g (145.4 mmol) of Desmodur ® N 3900 and 500.0 g of propyleneglycol monomethyl ether acetate are loaded in a reactor equipped with thermometer, stirrer and condenser, under nitrogen atmosphere and at room temperature.

290.8 g (145.4 mmol) of Jeffamine® M2005 are added under stirring. The reaction temperature increases by 6 °C.

The reaction is carried out until the content of NCO groups is constant, to obtain a solution of Adduct 1 in propyleneglycol monomethyl ether acetate.

15.6 g (116.3 mmol) of dimethylolpropionic acid are added to the solution. The reaction mixture is then heated up to 80°C and then 0.70 g of bismuth tris(neodecanoate) are added (catalyst).

The reaction is carried out at 80°C, until the content of NCO groups in the prepolymer is constant.

At approximately 80 °C, 116.3 g (58.2 mmol) of Jeffamine® M2005 are added under stirring.

After about 10 minutes, the disappearance of NCO groups is detected by IR analysis of the mixture (in particular with the disappearance of IR band at wave number 2260 - 2280 cm$^{-1}$) and the mixture is cooled to room temperature to give Dispersing Agent 9.

The relevant characteristics of the Dispersing Agent 1 to 9 are resumed in Table 1. In Table 1 the following abbreviations are used:

polyNCO= diisocyanate trimer (or polyisocyanate, Ex. 6 only)
$MPE_1$=monofunctional polyetheramine of step a.
m/n=moles of diisocyanate trimer (or of polyisocyanate, Ex. 6 only)/moles of diols
%DMPA= % mol of dimethylolpropionic acid on the sum of the diols
$D_{NI}$=non-carboxylated diol
$MPE_2$=monofunctional polyetheramine of step c.
N 3900=Desmodur® N 3900
N 3600=Desmodur® N 3600
AD= Polurene® AD
JM2005=Jeffamine® M2005
JM600=Jeffamine® M600
CHDM=cyclohexanedimethanol
BAP=bisphenol A propoxylated with two mole of propylenenoxide
IPA=isopropanol

Table 1

| Ex. | polyNCO | MPE$_1$ | m/n | % DMPA | DNI | MPE$_2$ |
|-----|---------|---------|------|--------|------|---------|
| 1 | N 3900 | JM2005 | 1.50 | 50 | CHDM | JM2005 |
| 2 | N 3900 | JM2005 | 1.50 | 100 | - | JM2005 |
| 3 | N 3600 | JM2005 | 1.50 | 100 | - | JM2005 |
| 4 | N 3900 | JM2005 | 1.50 | 50 | BAP | IPA |
| 5 | N 3900 | JM2005 | 1.33 | 67 | BAP | JM2005 |
| 6* | AD | JM2005 | 1.50 | 50 | CHDM | JM2005 |

(continued)

| Ex. | polyNCO | MPE$_1$ | m/n | % DMPA | DNI | MPE$_2$ |
|-----|---------|---------|------|--------|-----|---------|
| 7 | N 3900 | JM600 | 1.50 | 100 | - | JM600 |
| 8 | N 3900 | JM2005 | 2.00 | 100 | - | JM2005 |
| 9 | N 3900 | JM2005 | 1.25 | 100 | - | JM2005 |
| *comparative | | | | | | |

Preparation of the Ceramic Inkjet Inks

Nine ceramic inkjet inks (Ink 1 to Ink 9) were formulated at wt ratio of praseodymium zirconium silicate pigment /vehicle of 45/55 by using in each a different dispersing agent (Ink 1 with Dispersing Agent 1 and Ink 2 with Dispersing Agent 2 and the like) according to the %wt composition shown in Table 2.
In Table 2 the following abbrevations are used:

TPM =Dowanol® TPM from Dow
TPB =Dowanol® TPB from Dow
Isofol® 20 =2-octyl-dodecanol from Sasol

For all ink formulations the dispersing agent was stirred and dissolved in Dowanol®TPM, Dowanol® TPB and Isofol® 20 in 5 minutes. Then the pigment was added and mixed for 15 minutes.
The praseodymium zirconium silicate pigment had $d_{50} = 2.0\,\mu m$, measured by particle Size Analysis (Mastersizer 2000, Malvern Instruments).
1600 g of grinding media (YTZ® Grinding Media 0.3 mm, made of Yttrium Stabilized Zirconia Grinding Beads, produced by Nikkato Corporation) and 480 g of the mixture prepared as described above were charged into a Netzsch horizontal bead mill (Lab star model) and milled for 3 hours.

Table 2

| Ink vehicle formulation | |
|-------------------------|-----|
| | %wt |
| TPM | 35 |
| TPB | 40 |
| Isofol 20 | 15 |
| Dispersing agent | 10 |

The dispersing agent performances were evaluated by measuring the particle size distribution of the pigment in the inkjet ink and the rheological ink curves after milling and the stability after 14 days storage at 50°C.

Particle size distribution of the pigment after milling, rheology and stability of the inks.

The particle sizes of the pigment ($d_{10}$, $d_{50}$, $d_{90}$), as measured by a Mastersizer 2000 Malvern Instrument 3 hours after milling, are reported in Table 3 together with the viscosity values at 329 s$^{-1}$ shear rate, at 35°C and 45°C. The dispersing agent of the comparative Ink 6 jelled soon after its preparation and its particle size distribution and stability could not be measured (n.d.).
The stability of the inkjet inks was evaluated by visual examination of their homogeneity after storage at 50°C for 14 days.
"Good" means that no sediment formation occurs, or a sediment is formed but it can be re-dispersed immediately by stirring.
The stability results are also reported in Table 3.

Table 3

| Ink | $d_{10}$ (μm) | $d_{50}$ (μm) | $d_{90}$ (μm) | Viscosity, (35°C, 329 s⁻¹ shear rate, mPa*s) | Viscosity (45°C, 329 s⁻¹ shear rate, mPa*s) | Stability |
|---|---|---|---|---|---|---|
| 1 | 0.165 | 0.363 | 1.243 | 23.9 | 17.6 | good |
| 2 | 0.200 | 0.314 | 0.493 | 19.0 | 14.9 | good |
| 3 | 0.221 | 0.365 | 0.607 | 27.0 | 21.2 | good |
| 4 | 0.212 | 0.420 | 1.305 | 20.0 | 15.3 | good |
| 5 | 0.211 | 0.426 | 0.919 | 18.6 | 14.4 | good |
| 6* | n.d. | n.d. | n.d. | n.d. | n.d. | n.d. |
| 7 | 0.208 | 0.396 | 0.758 | 25.6 | 22.4 | good |
| 8 | 0.203 | 0.318 | 0.500 | 19.0 | 14.9 | good |
| 9 | 0.209 | 0.343 | 0.568 | 22.3 | 16.5 | good |
| *comparative | | | | | | |

**Claims**

1. Carboxylated polyurethane obtained by:

   a. reacting m moles of a diisocyanate trimer with m moles of a monofunctional polyetheralcohol or monofunctional polyetheramine having weight average molecular weight from 500 to 4,000, to obtain an adduct;
   b. reacting the above adduct with n moles of one or more diols, the molar ratio m/n being comprised between 1.09 and 2.00, provided that at least one of the diols is a carboxylated diol, the one or more carboxylated diol represents at least 40% in moles of the diols and the non-carboxylated diols are non-ionic and non-ionizable diols, to form an intermediate product;
   c. reacting the intermediate product with equivalent amounts, based on the isocyanate group (NCO) content, of a monofunctional polyetheralcohol or monofunctional polyetheramine having weight average molecular weight from 120 to 4,000, or of a $C_1$-$C_8$, linear or branched, alkyl or alkenyl monoalcohol, or of a $C_1$-$C_8$, linear or branched, alkyl or alkenyl primary or secondary monoamine.

2. Carboxylated polyurethane according to claim 1 obtained by reacting in step a. isocyanurates, iminooxadiazinediones or biureth trimers of aliphatic or cycloaliphatic diisocyanates as the diisocyanate trimers.

3. Carboxylated polyurethane according to claim 2 obtained by reacting in step a. the iminooxadiazinedione from 1,6-hexamethylenediisocyanate as the diisocyanate trimer.

4. Carboxylated polyurethane according to claim 1 obtained by reacting in step b. non-ionic or non-ionizable diols having molecular weight from 62 to 400 Dalton.

5. Carboxylated polyurethane according to claim 1 obtained by reacting in step b. the adduct with one or more diols, provided that the one or more carboxylated diol represent at least 60% in moles of the diols.

6. Carboxylated polyurethane according to claim 1 obtained by reacting in step b. the adduct with n moles of one or more diols, the molar ratio m/n being comprised between 1.20 and 2.00.

7. Carboxylated polyurethane according to claim 1 obtained by reacting in step a. the diisocyanate trimer with a monofunctional polyetheramine having weight average molecular weight from 800 to 4,000.

8. Ceramic inkjet ink comprising a carboxylated polyurethane according to any of claims from 1 to 7 and ceramic inorganic pigments having average particle size between 0.1 and 0.8 μm, the pigments being dispersed in an organic medium.

9. Method for decorating green or fired ceramic bodies by inkjet printing that comprises the following steps:

   i. a ceramic inkjet ink according to claim 8 is prepared by milling an inorganic ceramic pigment in an organic medium, in the presence of the carboxylated polyurethane;
   ii. a glaze is spread on the surface of a green or fired ceramic body;
   iii. the decoration is made by means of inkjet printing on the green or fired ceramic body by using one or more ceramic inkjet inks according to point i.;
   iv. the ceramic body is fired at temperature comprised between 900 and 1250°C for 15-240 minutes.

10. Method for decorating glass substrates by inkjet printing that comprises the following steps:

    I. a ceramic inkjet ink according to claim 8 is prepared by milling an inorganic ceramic pigment in an organic medium, in the presence of the carboxylated polyurethane;
    II. a glass frit is dispersed in an organic medium in the presence of a dispersing agent and milled to obtain a glass frit dispersion;
    III. the ceramic inkjet ink of point I and the glass frit dispersion of point II are mixed to form an inkjet ink for glass substrates;
    IV. the decoration is made by means of inkjet printing on the glass substrate by using one or more inkjet inks for glass substrates according to point III;
    V. the glass substrate is heated at temperature comprised between 500 and 700°C for 1-30 minutes.

**Patentansprüche**

1. Carboxyliertes Polyurethan, erhalten durch:

   a. Umsetzen von m Molen eines Diisocyanat-Trimers mit m Molen eines monofunktionellen Polyetheralkohols oder monofunktionellen Polyetheramins mit einem gewichtsmittleren Molekulargewicht von 500 bis 4000, um ein Addukt zu erhalten;
   b. Umsetzen des obigen Addukts mit n Molen eines oder mehrerer Diole zur Bildung eines Zwischenprodukts, wobei das Molverhältnis m/n zwischen 1,09 und 2,00 liegt, mit der Maßgabe, dass mindestens eines der Diole ein carboxyliertes Diol ist, dass das eine oder die mehreren carboxylierten Diole mindestens 40 Mol-% der Diole ausmacht bzw. ausmachen und die nicht-carboxylierten Diole nichtionische und nicht ionisierbare Diole sind;
   c. Umsetzen des Zwischenprodukts mit äquivalenten Mengen, bezogen auf den Gehalt an Isocyanatgruppen (NCO), eines monofunktionellen Polyetheralkohols oder monofunktionellen Polyetheramins mit einem gewichtsmittleren Molekulargewicht von 120 bis 4000 oder eines $C_1$-$C_6$. linearen oder verzweigten Alkyl- oder Alkenyl-monoalkohols oder eines primären oder sekundären $C_1$-$C_8$, linearen oder verzweigten Alkyl- oder Alkenylmonoamins.

2. Carboxyliertes Polyurethan nach Anspruch 1, erhalten durch Umsetzen von Isocyanuraten, Iminooxadiazindionen oder Biureth-Trimeren von aliphatischen oder cycloaliphatischen Diisocyanaten als die Diisocyanat-Trimere in Schritt a.

3. Carboxyliertes Polyurethan nach Anspruch 2, erhalten durch Umsetzen des Iminooxadiazindions von 1,6-Hexamethylendiisocyanat als das Diisocyanat-Trimer in Schritt a.

4. Carboxyliertes Polyurethan nach Anspruch 1, erhalten durch Umsetzen von nichtionischen oder nicht ionisierbaren Diolen mit einem Molekulargewicht von 62 bis 400 Dalton in Schritt b.

5. Carboxyliertes Polyurethan nach Anspruch 1, erhalten durch Umsetzen des Addukts mit einem oder mehreren Diolen in Schritt b., mit der Maßgabe, dass das eine oder die mehreren carboxylierten Diole mindestens 60 Mol-% der Diole darstellt bzw. darstellen.

6. Carboxyliertes Polyurethan nach Anspruch 1, erhalten durch Umsetzen des Addukts mit n Molen eines oder mehrerer Diole in Schritt b., wobei das Molverhältnis m/n zwischen 1,20 und 2,00 liegt.

7. Carboxyliertes Polyurethan nach Anspruch 1, erhalten durch Umsetzen, in Schritt a., des Diisocyanat-Trimers mit einem monofunktionellen Polyetheramin mit einem gewichtsmittleren Molekulargewicht von 800 bis 4000.

8. Keramische Tintenstrahltinte, umfassend ein carboxyliertes Polyurethan nach einem der Ansprüche 1 bis 7 und keramische anorganische Pigmente mit einer mittleren Partikelgröße zwischen 0,1 und 0,8 μm, wobei die Pigmente in einem organischen Medium dispergiert sind.

9. Verfahren zum Dekorieren von Rohkeramikkörpern oder gebrannten Keramikkörpern durch Tintenstrahldrucken, das die folgenden Schritte umfasst;

   i. eine keramische Tintenstrahltinte gemäß Anspruch 8 wird durch Mahlen eines anorganischen keramischen Pigments in einem organischen Medium in Gegenwart des carboxylierten Polyurethans hergestellt;
   ii. ein Überzug wird auf der Oberfläche eines Rohkeramikkörpers oder gebrannten Keramikkörpers aufgebracht;
   iii. die Dekoration wird mittels Tintenstrahldruckens auf dem Rohkeramikkörper oder gebrannten Keramikkörper unter Verwendung einer oder mehrerer keramischer Tintenstrahltinten gemäß Punkt i. hergestellt;
   iv. der Keramikkörper wird 15-240 Minuten bei einer Temperatur zwischen 900 und 1250 °C gebrannt.

10. Verfahren zum Dekorieren von Glassubstraten durch Tintenstrahldrucken, das die folgenden Schritte umfasst:

   I. eine keramische Tintenstrahltinte gemäß Anspruch 8 wird durch Mahlen eines anorganischen keramischen Pigments in einem organischen Medium in Gegenwart des carboxylierten Polyurethans hergestellt;
   II. eine Glasfritte wird in einem organischen Medium in Gegenwart eines Dispergiermittels dispergiert und gemahlen, um eine Glasfritten-Dispersion zu erhalten;
   III. die keramische Tintenstrahltinte von Punkt I. und die Glasfritten-Dispersion von Punkt II. werden gemischt, um eine Tintenstrahltinte für Glassubstrate zu bilden;
   IV. die Dekoration wird durch Tintenstrahldrucken auf dem Glassubstrat unter Verwendung einer oder mehrerer Tintenstrahltinten für Glassubstrate gemäß Punkt III. hergestellt;
   V. das Glassubstrat wird 1-30 Minuten auf eine Temperatur zwischen 500 und 700 °C erhitzt.

**Revendications**

1. Polyuréthanne carboxylé obtenu par :

   a. réaction de m moles d'un trimère diisocyanate avec m moles d'un polyéther alcool monofonctionnel ou d'une polyétheramine monofonctionnelle ayant un poids moléculaire moyen en poids de 500 à 4 000, pour obtenir un adduit ;
   b. réaction de l'adduit ci-dessus avec n moles d'un ou de plusieurs diols, le rapport molaire m/n étant compris entre 1,09 et 2,00, à condition qu'au moins un des diols soit un diol carboxylé, que le ou les diols carboxylés représentent au moins 40 % en moles des diols et que les diols non carboxylés soient des diols non ioniques et non ionisables, pour former un produit intermédiaire ;
   c. réaction du produit intermédiaire avec des quantités équivalentes, basées sur la teneur en groupes isocyanate (NCO), d'un polyéther alcool monofonctionnel ou d'une polyétheramine monofonctionnelle ayant un poids moléculaire moyen en poids de 120 à 4 000,
   ou d'un monoalcool d'alkyle ou d'alcényle $C_1$-$C_8$, linéaire ou ramifié,
   ou d'une monoamine d'alkyle ou d'alcényle primaire ou secondaire $C_1$-$C_8$, linéaire ou ramifiée.

2. Polyuréthanne carboxylé selon la revendication 1 obtenu par réaction dans l'étape a. d'isocyanurates, d'iminooxadiazine-diones ou de trimères biureth de diisocyanates aliphatiques ou cycloaliphatiques à titre des trimères diisocyanate.

3. Polyuréthanne carboxylé selon la revendication 2 obtenu par réaction dans l'étape a. de l'iminooxadiazinedione d'un diisocyanate de 1,6-hexaméthylène à titre de trimère diisocyanate.

4. Polyuréthanne carboxylé selon la revendication 1 obtenu par réaction dans l'étape b. de diols non ioniques ou non ionisables ayant un poids moléculaire de 62 à 400 Daltons,

5. Polyuréthanne carboxylé selon la revendication 1 obtenu par réaction dans l'étape b. de l'adduit avec un ou plusieurs diols, à condition que le ou les diols carboxylés représentent au moins 60 % en moles des diols.

6. Polyuréthanne carboxylé selon la revendication 1 obtenu par réaction dans l'étape b. de l'adduit avec n moles d'un ou de plusieurs diols, le rapport molaire m/n étant compris entre 1,20 et 2,00.

**7.** Polyuréthanne carboxylé selon la revendication 1 obtenu par réaction dans l'étape a. du trimère diisocyanate avec une polyétheramine monofonctionnelle ayant un poids moléculaire moyen en poids de 800 à 4 000.

**8.** Encre à jet d'encre pour céramique comprenant un polyuréthanne carboxylé selon l'une quelconque des revendications 1 à 7 et des pigments inorganiques pour céramique ayant une granulométrie moyenne entre 0,1 et 0,8 $\mu$m, les pigments étant dispersés dans un milieu organique.

**9.** Méthode de décoration de corps en céramique crus ou cuits par impression à jet d'encre qui comprend les étapes suivantes :

i. une encre à jet d'encre pour céramique selon la revendication 8 est préparée par broyage d'un pigment inorganique pour céramique dans un milieu organique, en présence du polyuréthanne carboxylé ;
ii. un vernis est étalé sur la surface d'un corps en céramique cru ou cuit ;
iii. la décoration est effectuée par impression à jet d'encre sur le corps en céramique cru ou cuit à l'aide d'une ou de plusieurs encres à jet d'encre pour céramique selon le point i. ;
iv. le corps en céramique est cuit à une température comprise entre 900 et 1 250 °C pendant 15 à 240 minutes.

**10.** Méthode de décoration de substrats en verre par impression à jet d'encre qui comprend les étapes suivantes :

I. une encre à jet d'encre pour céramique selon la revendication 8 est préparée par broyage d'un pigment inorganique pour céramique dans un milieu organique, en présence du polyuréthanne carboxylé ;
II. une fritte de matière vitrifiable est dispersée dans un milieu organique en présence d'un agent de dispersion et broyée pour obtenir une dispersion de fritte de matière vitrifiable ;
III. l'encre à jet d'encre pour céramique selon le point I et la dispersion de fritte de matière vitrifiable selon le point II sont mélangées pour former une encre à jet d'encre pour substrats en verre ;
IV. la décoration est effectuée par impression à jet d'encre sur le substrat en verre à l'aide d'une ou de plusieurs encres à jet d'encre pour substrats en verre selon le point III ;
V. le substrat en verre est chauffé à une température comprise entre 500 et 700 °C pendant 1 à 30 minutes.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7803221 B
- EP 2159269 A
- WO 2006126189 A
- EP 1840178 A
- WO 2012076438 A
- WO 2012107379 A
- WO 2012116878 A
- DE 19611849

**Non-patent literature cited in the description**

- **H. J. LAAS ; R. HALPAAP ; J. PEDAIN ; J. PRAKT.** The Synthesis of Aliphatic Polyisocyanates Containing Biuret, Isocyanurate or Uretdione Backbones for Use in Coatings. *Chem./Chem. Ztg,* 1994, vol. 336, 185-200